# EUROPÄISCHE PATENTSCHRIFT

(11) **EP 2 033 713 B1**
(45) Veröffentlichungstag und Bekanntmachung des Hinweises auf die Patenterteilung: **12.09.2012**
(21) Anmeldenummer: 08015886.8
(22) Anmeldetag: 20.07.2004
(51) Int. Cl.: B03B 5/28, B03B 5/36, B03B 11/00, B03B 13/00, B29B 17/02

(54) **Vorrichtung und Verfahren zum Schwimm-Sink Trennen von Feststoffteilchen unterschiedlicher Dichte**
Device and method for sink-float-separation of solid particles having different densities
Dispositif et procédé de séparation des particules solides plongeantes et flottantes à densités différentes

(43) Veröffentlichungstag der Anmeldung: 11.03.2009
(62) Teilanmeldung aus: 04017065.6
(73) Patentinhaber: APK Aluminium und Kunststoffe AG, 06217 Merseburg (DE)
(72) Erfinder: Lindner, Wolfgang, Dr., 41539 Dormagen (DE)
(74) Vertreter: GROSSE SCHUMACHER KNAUER VON HIRSCHHAUSEN

(56) Entgegenhaltungen:
- EP-A1- 0 555 784
- DE-A1- 4 309 326
- DE-C1- 19 632 494
- US-A- 2 451 528
- US-A- 5 740 918

## Beschreibung

Die Erfindung betrifft eine Vorrichtung und ein Verfahren zum Schwimm-Sink-Trennen von Feststoffteilchen unterschiedlicher Dichte nach dem Oberbegriff des Anspruchs 1 bzw. 10.

Die Schwimm-Sink-Trennung wird für verschiedene Aufgaben eingesetzt. Beim Kunststoffrecycling dient sie beispielsweise dazu, aus zu einem Granulat geschredderten unsortierten Kunststoffen Störstoffe wie etwa Polyvinylchlorid, das beim Einschmelzen oder Vergasen unerwünschte Chlorgase freisetzt, abzutrennen. Bei einer anderen Aufgabe ist z.B. Polyethylen-Mahlgut von Polypropylen-Mahlgut zu trennen, um zwei möglichst sortenreine Kunststoffe mit Neuwarencharachter zumindest bei den wichtigsten mechanischen Eigenschaften zu erhalten. Weitere Anwendungsgebiete sind beispielsweise die Abtrennung von Metall- und Kunststoff- bzw. Kautschukteilchen beim Kabelrecycling, Kunststoffteilchen von Papierfasern bei der Rejektverwertung aus der Altpapierverwertung und die Trennung von Nichteisenmetallen von Eisen.

Hierzu wird ein Gemenge aus zu trennenden Feststoffen in Suspension mit einem Trennmedium gebracht, dessen Dichte zwischen der Dichte der wiederverwertbaren Wertstoffe und der jeweiligen Störstoffe eingestellt wird. Das Gemenge trennt sich dabei in eine aufschwimmende Leichtfraktion und eine infolge Schwerkrafteinwirkung absinkende Schwerfraktion, die jeweils ausgetragen, gegebenenfalls getrocknet und dann weiterverarbeitet werden.

Für die Aufgabe einer Kunststofftrennung ist aus der DE 199 30 161 A1 bekannt, die Suspension durch ein senkrecht aufsteigendes Zuführrohr in die Mitte eines zylindrischen Trennraums einzuleiten und die Fraktionen in einem sich von der Einspritzstelle radial auswärts vergrößernden Querschnitt, der von zwei in der Mitte des Trennraums mit der Spitze aufeinanderstehenden Kreiskegeln begrenzt wird, ausbilden zu lassen und von den Kreiskegelflächen zu einer oberen bzw. unteren äußeren Kreisscheibe des Trennraums zu leiten, wo die vollständig ausgebildeten Fraktionen aus dem Trennraum aus- und in einen oberen bzw. unteren Sammelbehälter eintreten.

Nachteilig ist hierbei, daß die Austrittsgeschwindigkeit der Suspension infolge des senkrecht aufsteigenden Zuführrohrs höher sein muss als die Sinkgeschwindigkeit der schwersten Feststoffteilchen, damit diese nicht zurücksedimentieren. Aus dieser hohen Austrittsgeschwindigkeit resultiert eine turbulente Strömung zumindest im Bereich des Austritts, so dass insbesondere Feststoffteilchen mit einer Dichte nahe der Dichte des Trennmediums sowie kleine Feststoffteilchen nach dem Zufallsprinzip in den aufschwimmenden oder absinkenden Fraktionsstrom gelangen. Eine Trennung ist mit der bekannten Vorrichtung daher nicht mit akzeptabler Genauigkeit erreichbar. Zudem ist der Durchsatz durch die Ausbildung von Turbulenzen bei hohen Austrittsgeschwindigkeiten stark eingeschränkt.

Aus der DE 199 81 222 C1 ist eine ähnliche Vorrichtung bekannt, bei der die Kreiskegel zwischen zwei horizontalen kreisscheibenförmigen Blechen angeordnet sind und zusammen mit diesen eine mittig im Trennraum angeordnete Umlenkeinrichtung für die senkrecht nach oben unter Druck eingeführte Suspension mit zunächst turbulenter Charakteristik in eine im Idealfall radial auswärts gerichtete laminare Strömung bilden.

Allerdings sind die erzielbare Sortenreinheit und Trennschärfe auch hier unbefriedigend. So gibt die DE 199 81 222 C1 als geeigneten Durchmesser der Feststoffteilchen den Bereich zwischen etwa 10 und 50 mm an. Der für eine optimale Sortenreinheit bei der Wiederverwertung von Kunststoffen erforderliche Durchmesser liegt jedoch weit darunter, nämlich bei etwa 2 bis 7 mm, wobei beim Schreddem noch bis zu 15 Gew.-% Feststoffteilchen mit einem Durchmesser bis hinab auf 0,5 mm anfallen. Versuche mit bei Kraftfahrzeugen typischen Kunststoffen haben ergeben, dass schon bei einem Granulatdurchmesser von etwa 7 mm zwischen 20 und 30 % Feststoffteilchen in der aufschwimmenden Leichtfraktion vorhanden sind, die eigentlich zur absinkenden Schwerfraktion gehören. Eine hohe Sortenreinheit und Trennschärfe sind mit der aus der DE 199 81 222 C1 bekannten Vorrichtung daher nicht erreichbar.

Problematisch ist zudem die optimale Beabstandung der Bleche. Ist der Abstand zu groß, kommen Feststoffteilchen mit einer Dichte nahe der Dichte des Trennmediums beim Austritt in den Trennraum nicht in der zugehörigen Strömungshälfte an und werden mit der falschen Strömung mitgerissen. Ist der Abstand hingegen zu gering, stellt sich eine hohe Strömungsgeschwindigkeit ein, so dass die Feststoffteilchen in der Umlenkvorrichtung entsprechend ihrer zufälligen Verteilung nach Austritt aus dem Zuführrohr mitgerissen werden und zudem beim Übergang in den Trennraum weitere Turbulenzen entstehen, die die Ausbildung der Fraktionen stören.

Ferner setzen sich nach Abstellen der Vorrichtung Feststoffpartikel auf den horizontalen Blechen ab, die bei nachfolgender Inbetriebnahme mit der Schwerfraktion aus dem Trennraum ausgetragen werden, bevor sich die für den Betrieb stabilen Strömungsverhältnisse einstellen.

Schließlich bleibt bei den bekannten Vorrichtungen und Verfahren ein weiterer Effekt vollständig unberücksichtigt. Es hat sich nämlich herausgestellt, dass beim Einbringen der Feststoffteilchen in das Trennmedium Luftteilchen an den Feststoffteilchen anhaften und deren wirksame spezifische Dichte verringern können. Hierdurch gelangt ein Teil der spezifisch schweren Feststoffteilchen in die aufschwimmende Leichtfraktion und verunreinigt diese. Dieser Effekt ist insbesondere bei den so genannten technischen Kunststoffen wie PET-, Polyamid-, und PVC-Hartkunststoffmahlgütem, ob verstärkt oder unverstärkt, stark ausgeprägt. Aus der DE 196 32 494 C1 ist eine Vorrichtung zum Sortieren von Gemischen aus Kunststoffschnitzeln bekannt, bei der den Kunststoffschnitzeln anhaftende Luftbläschen durch Verwirbelung des Gemischs entfernt werden.

Mit den bekannten Vorrichtungen und Verfahren ist daher insbesondere unter Bedingungen, die bei der Wiederverwertung von Kunststoffen vorherrschen, und bei hohem Durchsatz keine zufriedenstellend genaue Trennung erreichbar.

Der Erfindung liegt daher die Aufgabe zugrunde, eine Vorrichtung und ein Verfahren zum Schwimm-Sink-Trennen von Feststoffteilchen unterschiedlicher Dichte nach dem Oberbegriff des Anspruchs 1 bzw. zu schaffen, die bei erhöhtem Durchsatz eine genauere Trennung ermöglichen. gelöst.

Diese Aufgabe wird entsprechend den Merkmalen des Anspruchs 1 bzw. 10 gelöst.

Dem Auftriebseffekt durch anhaftende Auftriebselemente kann erfindungsgemäβ durch zumindest teilweises Entgasen des Trennmediums entgegengewirkt werden. Hierzu kann einer Mischvorrichtung, in der die Feststoffteilchen in das Trennmedium eingebracht werden, eine Entgasungsvorrichtung vorgeschaltet sein. Das aus der Entgasungsvorrichtung aus-und in die Mischvorrichtung eintretende Trennmittel ist nicht mehr im Gas-Gleichgewicht und absorbiert an den Feststoffteilchen anhaftende Luft bis zu seinem Gas-Gleichgewichtszustand. Damit kann bei optimaler Abstimmung der Entgasungsparameter auf das Trennmedium und die Entgasungsvorrichtung der Auftriebseffekt so weit vermindert oder sogar aufgehoben werden, dass eine bisher unerreichte Trennschärfe bei großem Durchsatz erreicht wird.

Dem Auftriebseffekt kann zudem durch Schwingungserregung des Suspensionsstroms insbesondere im Bereich der Einmündung des Zuführkanals in den Trennraum, gegebenenfalls auch im Zuführkanal, entgegengewirkt werden. Durch die Schwingungen können die Auftriebselemente von den Feststoffteilchen abgelöst werden. Die Schwingungserregung bewirkt zusätzlich, dass aneinander haftende Feststoffteilchen getrennt werden.

Im Ergebnis wird mit dem beanspruchten Verfahren und der beanspruchten Vorrichtung eine erheblich genauere Trennung unter erhöhtem Durchsatz erreicht.

Weitere Ausgestaltungen der Erfindung sind der nachfolgenden Beschreibung und den Unteransprüchen zu entnehmen.

Durch ein schräg verlaufenden Kanal mit quer zur Längsachse zugeführter Suspension können sich die Fraktionen in jeweils einer laminaren Strömung über einen langen Weg hinweg ausbilden. Turbulenzen werden dabei bereits im Zuführkanal reduziert und die Strömung geht im Einlaufbereich des Kanals vollständig in den laminaren Zustand über. Im Kanal sind die Leicht- und Schwerfraktion nahe beieinander, so dass Feststoffteilchen unter Schwerkrafteinwirkung schnell in die entsprechende Fraktion gelangen. Durch eine Austragvorrichtung zum Austragen eines Fraktionsstroms kann die Strömungsgeschwindigkeit des Schwerfraktionsstroms im Kanal auf einen gewünschten Wert eingestellt und konstant gehalten werden. Es wird eine optimale Trennwirkung mit hohem Durchsatz erzielt.

Der Kanal stellt dabei jeweils eine Trennfläche für die aufsteigenden und für die absinkenden Feststoffteilchen bereit, an der diese infolge der in der Grenzschicht herrschenden geringen Geschwindigkeiten des Trennmediums entlang zum jeweiligen Sammelkopf gleiten können. Zudem wirkt der Kanal insbesondere bei höheren Strömungsgeschwindigkeiten beruhigend auf das Trennmedium ein, d.h. er reduziert Turbulenzen.

In einer Ausführungsform sind im Trennraum durch eine oder mehrere vertikal zueinander beabstandete parallele Platten mehrere Kanäle gebildet. Hierdurch wird der Durchsatz bei im wesentlichen gleichbleibendem Platzbedarf gesteigert.

Hierbei können sich Platten aus dem Trennraum in den Zuführkanal für die Suspension hinein erstrecken, um Turbulenzen entgegenzuwirken. Die Platten erstrecken sich dann vorzugsweise nicht mehr als 1/3 in den Zuführkanal hinein, da sonst eine Vortrennung der Feststoffteilchen im Verteilerkanal verhindert wird.

Vorzugsweise ist zwischen der Zuführöffnung für die Suspension und dem oberen Sammelkopf eine weitere Zuführöffnung für Trennmedium ohne Feststoffteilchen vorgesehen. Hierbei werden die pro Zeiteinheit zugeführte Suspensionsmenge M_{S} und die pro Zeiteinheit zugeführten Regelungsmenge M_{R} reinen Trennmittels in den Trennraum insbesondere derart eingestellt, daß die Regelungsmenge M_{R} mehr Trennmittelvolumen eindosiert, als in den oberen Sammelkopf für die Leichtfraktion fließen muß. Hierdurch wird erreicht, daß alle Schwergutteilchen, also auch diejenigen, die anfänglich im Zulaufbereich des Suspensionsstroms wegen fehlender Vortrennung noch in dessen oberen Bereich schwimmen, der hohen Schwerfraktionsströmung ausgesetzt sind und so nur dann in den Leichtfraktionsstrom geraten können, wenn ihre Auftriebskraft zu einer Aufstiegsgeschwindigkeit führt, die größer als die Senkrechtkomponente des ebenfalls abwärtsgerichteten Teilstroms der Regelungsmenge M_{R} ist.

Dem Auftriebseffekt durch anhaftende Auftriebselemente kann auch durch Einstellen einer Differenzgeschwindigkeit zwischen dem aufwärts gerichteten Leichtfraktionsstrom einerseits und dem abwärts gerichteten Schwerfraktionsstrom andererseits in bestimmten Bereichen wirksam entgegengewirkt werden. Die Differenzgeschwindigkeit ist hier der Betrag der Geschwindigkeit des Schwertfraktionsstroms abzüglich des Betrags der Geschwindigkeit des Leichtfraktionsstroms jeweils entlang der Kanäle.

Die Differenzgeschwindigkeit wird dabei vorzugsweise durch Steuern der Förderleistung einer Pumpe zum Austragen der Schwerfraktion aus dem unteren Sammelkopf und der einer Mischvorrichtung pro Zeiteinheit zugeführten Menge an Trennmedium eingestellt. Hierdurch ist die Differenzgeschwindigkeit ohne die Notwendigkeit einer komplexen Steuerung einfach und genau einstellbar. Bei benötigter Konstanz des Austragsvolumens der Schwerfraktion wird die Differenzgeschwindigkeit vorzugsweise über die Suspensionszulaufmenge geregelt. Eine Kombination beider Regelmöglichkeiten ist möglich.

Die Differenzgeschwindigkeit kann auf einen Wert zwischen 0 und 1,5 und vorzugsweise zwischen 0 und 0,9 cm pro Sekunde eingestellt werden, so dass der aufschwimmende Fraktionsstrom um den eingestellten Betrag langsamer aufschwimmt als der absinkende Fraktionsstrom absinkt. Bei dieser Einstellung sind insbesondere Kunststoffe mit einer Dichte größer als 1,24 g/cm³ von solchen mit Dichten kleiner als 1,24 g/cm³ am genausten abtrennbar.

Vorzugsweise ist der Winkel α zwischen dem Kanal und der Horizontalen einstellbar. Mit steigendem α wird die horizontale Geschwindigkeitskomponente der Strömung kleiner. Daher ist eine entsprechend längere Kanalstrecke erforderlich, bis die Feststoffteilchen zur jeweiligen Kanalwand gelangen. Geeignete Werte für α sind 30°<α< 60° und vorzugsweise 35°<α<45°.

Weitere Ausgestaltungen der Erfindung sind der nachfolgenden Beschreibung und den Unteransprüchen zu entnehmen.

Die Erfindung wird nachstehend anhand der in den beigefügten Figuren dargestellten Ausführungsbeispiele näher erläutert.
Fig. 1 zeigt eine Seitenansicht einer Vorrichtung zum Schwimm-Sink-Trennen.
Fig. 2 zeigt eine Stirnansicht der Vorrichtung aus Fig. 1.
Fig. 3 zeigt einen Schnitt entlang der Linie A-A der Fig. 1.
Fig. 4 und 5 zeigen jeweils eine andere Ausführungsform im Schnitt entlang der Linie A-A der Fig. 1.
Fig. 6 zeigt eine Einrichtung zur Schwingungserregung.
Fig. 7 zeigt eine weitere Einrichtung zur Schwingungserregung.
Fig. 8 zeigt die Vorrichtung aus Fig. 1 mit daran angeschlossenen Komponenten.
Fig. 9 zeigt einen Abschnitt einer weiteren Ausführungsform in Draufsicht.
Fig. 10 zeigt ein vereinfachtes Verfahrensschema einer Trennanlage mit einer Entgasungsvorrichtung.
Fig. 11 zeigt eine Ausführungsform der Trennvorrichtung mit einer Schnecke.

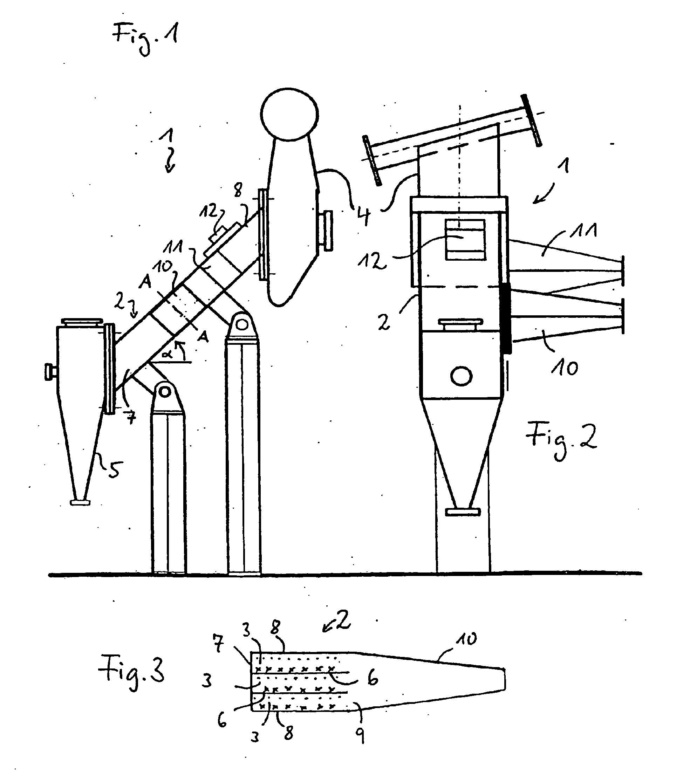

Die in Fig. 1 bis 3 dargestellte Vorrichtung 1 zum Schwimm-Sink-Trennen umfaßt einen mit einer Suspension aus zu trennenden Feststoffteilchen und einem Trennmedium füllbaren Trennraum 2 mit Kanälen 3, die in auf unterschiedlicher Höhe angeordneten unteren und oberen Sammelköpfen 4, 5 für unter Schwerkrafteinwirkung in den Kanälen 3 abgesunkene bzw. aufgeschwommene Feststoffteilchen münden.

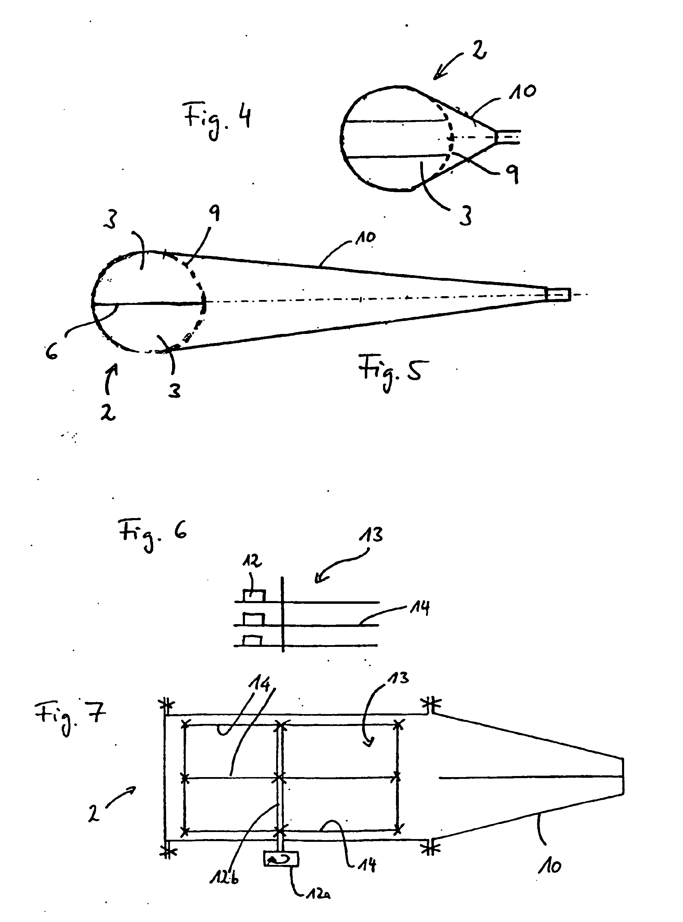

Die Kanäle 3 werden hier durch vier vertikal gleich beabstandete parallele Platten 6 sowie Seitenwände 7 des Trennraums 2 gebildet. Die oberste und die unterste der Platten 6 bildet gleichzeitig eine obere bzw. untere Wandung 8 des Trennraums 2. Der Abstand zwischen zwei benachbarten Platten 6 ist dabei zweckmäßigerweise kleiner als der Abstand zwischen den Seitenwänden 7, so dass sich ein rechteckiger Querschnitt mit einer großen Leitfläche jeweils für die aufschwimmenden und in Fig. 3 mit einem Punkt gekennzeichneten sowie den absinkenden und in der Fig. 3 mit einem Kreuz gekennzeichneten Feststoffteilchen ergibt. Es können auch lediglich drei Platten 6, die zwei Kanäle 3 bilden, sowie mehr als vier Platten 6 vorgesehen sein, wobei zweckmäßigerweise 2 bis 20, vorzugsweise 2 bis 10 Kanäle gebildet werden. Zudem kann der Trennraum 2 auch rohrförmig mit mehreren insbesondere durch Platten 6 getrennten Kanälen 3 ausgestaltet sein, vgl. Fig. 4 und 5.

Der Winkel α zwischen den Kanälen 3 und der Horizontalen ist hier über eine Höhenverstellung einer der beiden den Trennraum 2 tragenden Pfeiler möglich, beispielsweise durch eine Schraube/Spindel-Mechanik, eine hydraulische Einrichtung o.ä. kontinuierlich oder durch teleskopartiges Ineinanderschieben und Verschrauben zweier konzentrisch angeordneter Pfeilerelemente.

Zwischen den Sammelköpfen 4, 5 ist in einer der Seitenwände 7 eine Zuführöffnung 9 für die Suspension vorgesehen, vgl. Fig. 4. Die Suspension ist quer zur Längsachse der Kanäle 3 einleitbar. Hierzu ist an die Zuführöffnung 9 ein insbesondere horizontaler Zuführkanal 10 angeschlossen, der hier einen sich aufweitenden und die Strömungsgeschwindigkeit verringernden Querschnitt aufweist. Der Zuführkanal 10 hat dabei zweckmäßigerweise eine Länge, die nicht kleiner als der vertikale Durchmesser der Zuführöffnung 9 ist, vgl. Fig. 4, jedoch deutlich länger sein kann, vgl. Fig. 5, damit die zugeführte Suspension möglichst turbulenzfrei ist. Im Bereich der Zuführöffnung 9 können die Platten 6 für eine bessere Verteilung der Suspension unterbrochen, insbesondere durchlocht sein, und sich gegebenenfalls in den Zuführkanal 10 auf vorzugsweise 1/3 seiner Länge hinein erstrecken.

Im Fall von Trennvorrichtungen mit einer hohen Anzahl von Strömungskanälen 3, z.B. mehr als 3 Strömungskanälen, kann der Zuführkanal eine der Anzahl der Strömungskanäle 3 entsprechende Anzahl von Unter-Zuführkanälen erhalten, so daß eine einfache und gleichmäßige Verteilung des Suspensionstroms auf die einzelnen Strömungskanäle sicher gestellt ist.

Die Zuführöffnung 9 ist bei Trennaufgaben, bei denen die Leichtfraktion die Zielfraktion mit der höheren Reinheitsanforderung ist, näher am unteren als am oberen Sammelkopf 4, 5 angeordnet, damit diejenigen Feststoffteilchen der Schwerfraktion, die mit dem aufsteigenden Leichtfraktionsstrom mitgerissen werden, noch vor Eintritt in den oberen Sammelkopf 4 in den absinkenden Schwerfraktionsstrom gelangen können. Ist die Schwerfraktion die Zielfraktion, sollte die Zuführöffnung 9 entsprechend näher am oberen Sammelkopf 4 angeordnet sein.

In Fällen, bei denen die Mitreißgefahr schwerer Teilchen in den Leichtfraktionsstrom zu groß ist, kann oberhalb der Zuführöffnung 9 eine weitere Zuführöffnung angeordnet sein, durch die mittels eines zugehörigen Zuführkanals 11 reines Trennmittel als sogenannte Regelmenge in den Trennraum 2 eindosiert wird. Diese Regelmenge wird vorzugsweise so eingestellt, dass der von ihr nach unten strömende Teilstrom eine Strömungsgeschwindigkeit besitzt, die größer als die Aufstiegsgeschwindigkeit der sonst im Leichtfraktionsstrom mitgerissenen schweren Feststoffteilchen ist.

Ferner kann eine Einrichtung 12 zur Schwingungserregung mit wenigstens einem Motor, Piezoelement oder dgl. vorgesehen sein, der bzw. das auf die Platten 6 und/oder die Seitenwände 7 des Trennraums 2 einwirkend das Trennmittel sowie die Feststoffteilchen der Suspension in Schwingung versetzt. Geraten die Teilchen in Schwingungsknoten des Trennmittels, ist die reinigende Wirkung der Schwingungen besonders wirkungsvoll. Es hängt von der Aufgabe und dem zu trennenden Gut ab, welche Schwingungserreger und welche Schwingungsfrequenz eingesetzt wird. Im Falle einer Kunststofftrennung haben mechanische Schwingungserreger mit Frequenzen im Bereich zwischen 10000 und 45000 min⁻¹ sehr gute Wirkung gezeigt. Bei mit Auftriebselementen behafteten Feststoffteilchen konnte dadurch bei gleichbleibender Trennqualität die Geschwindigkeitsdifferenz der beiden Teilströme in den Kanälen 3 zwischen 20 und ca. 30% reduziert, d.h. der Feststoff-Durchsatz entsprechend erhöht werden.

Durch Einsatz von Ultraschallgeneratoren lassen sich im Frequenzbereich von 10 bis 40 kHz, vorzugsweise 15 bis 25 kHz über Kavitationseffekte nicht nur Luftelemente von den Feststoffteilchen sicher entfernen, sondern auch gut benetzende leichtere Flüssigkeiten sowie Feingut mit geringerer Dichte.

Die Einrichtung 12 kann dabei auf eine Außenwandung des Trennraums 2 aufgesetzt sein, vgl. Fig. 1. Alternativ oder zusätzlich können auch die Platten 6 direkt zum Schwingen angeregt werden. In einer Ausführungsform ist hierzu ein seitlich an den Trennraum 2 lösbar befestigbarer Einschub 13 mit Plattenabschnitten 14 vorgesehen, die sich ins Innere des Trennraums 2 erstrecken und in entsprechende, gegebenenfalls mit einer Führungsnut od.dgl. versehene Aussparungen der Platten 6 eingreifen, vgl. Fig. 6. Die Plattenabschnitte 14 können durchlocht sein.

Vorzugsweise werden die übereinander angeordneten Plattenabschnitte 14 im Randbereich beispielsweise durch Einspannen in Querverbinder starr befestigt, vgl. Fig. 7. Die Einrichtung 12 umfaßt dann zweckmäßigerweise einen Erregerstab 12b, der sich durch einen mittleren Bereich der Plattenabschnitte 14 erstreckt und von einem Erregermotor 12a in Schwingungen versetzt wird. Durch die Einspannung der Plattenabschnitte 14 im Randbereich und die Schwingungsanregung im mittleren Bereich schwingen die Plattenabschnitte 14 membranartig. Die Schwingungen des Erregermotors 12a werden somit sehr effektiv auf die Suspension und die Feststoffteilchen darin übertragen.

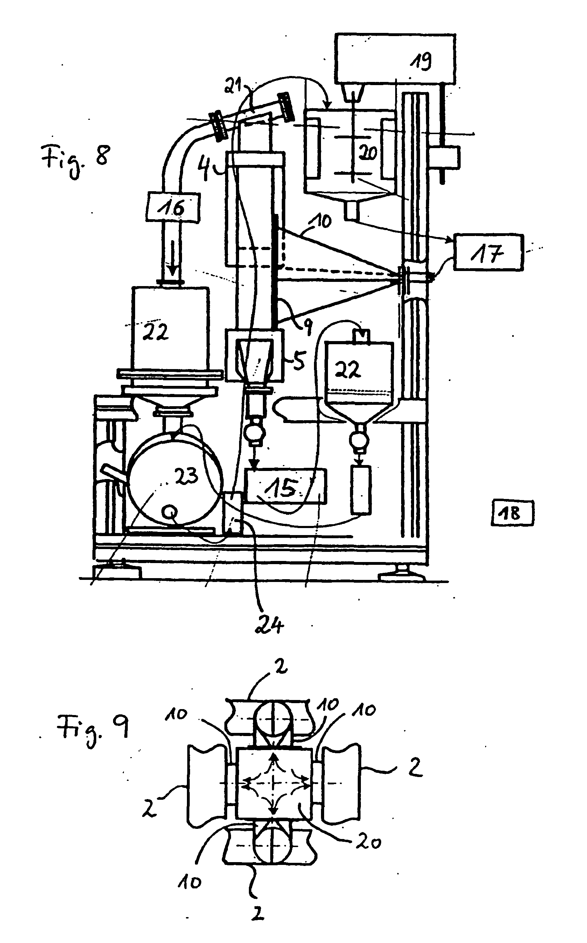

Schließlich ist hier eine Einrichtung zum Einstellen der Differenzgeschwindigkeit zwischen dem aufwärts gerichteten Leichtfraktionsstrom und dem abwärts gerichteten Schwerfraktionsstrom vorgesehen, vgl. Fig. 8. Sie umfasst eine Pumpe 15 zum Austragen der Schwerfraktion aus dem unteren Sammelkopf 5, eine Pumpe 16 zum Austragen der Leichtfraktion aus dem oberen Sammelkopf 4, eine Pumpe 17 zum Zuführen der Suspension durch den Zuführkanal 10 und/oder eine Pumpe 24, über die die dem Trennraum 2 pro Zeiteinheit zugeführte Menge der Suspension indirekt gesteuert wird, vorzugsweise jedoch nur die Pumpen 15 und 24, sowie eine Pumpensteuerung 18.

Die Pumpensteuerung 18 steuert die Förderleistung der je nach Ausführungsform vorhandenen Pumpen 15, 16, 17 und/oder 24 derart, daß sich eine Differenzgeschwindigkeit zwischen dem aufwärts gerichteten Leichtfraktionsstrom und dem abwärts gerichteten Schwerfraktionsstrom einstellt, bei der die Trennschärfe optimal ist. Die optimale Förderleistung wird empirisch ermittelt.

Der Betrieb der Vorrichtung zum Schwimm-Sink-Trennen wird unter Bezugnahme auf Fig. 8 beschrieben.

Zu trennende Feststoffteilchen, beispielsweise Kunststoffgranulate mit einem Durchmesser von 0,5 bis 50 mm, insbesondere 1 bis 10 mm, vorzugsweise 2 bis 7 mm, gegebenenfalls mit bis zu 15 Gew.%, insbesondere bis zu 10 Gew.% und vorzugsweise bis zu 5 Gew.% beim Zerkleinerungsprozeß, z.B. Mahlen oder Schreddern, entstandenen kleineren Teilchen, oder Kunststoffolienteilchen od.dgl. werden in eine Mischvorrichtung 20 eingebracht und dort mittels einer Rührvorrichtung 19 mit einem Trennmedium zu einer Suspension vermischt.

Als Trennmedium wird bei einer Trenndichte oberhalb von 1 g/cm³ insbesondere Wasser verwendet, dem zur Dichtesteuerung Salz in einer bestimmten Konzentration beigesetzt ist. Für Trenndichten unterhalb von 1 g/cm³ können bei der erfindungsgemäßen Vorrichtung im Gegensatz zu den bisher bekannten Vorrichtungen organische Flüssigkeiten mit niedrigem Flammpunkt als Trennmedium verwendet werden, wie z.B. eine Alkohol/Wasserlösung oder reines Ethylacetat bei 20°C zur Trennung von PP/PE, da die Vorrichtung auf einfache Weise gasdicht gestaltet werden kann und keinerlei Zündfunkengefahrenpotential in der Vorrichtung gegeben ist. Die Mischvorrichtung 20 wird in diesem Fall ebenfalls gasdicht gestaltet, gegebenenfalls mit einem Inertgas beaufschlagt und/oder mit einer Absaugvorrichtung zur Entfernung der mit dem zu trennenden Produkt eingetragenen Luft ausgerüstet.

Die Mischvorrichtung 20 ist zweckmäßigerweise erhöht angeordnet mit einem Füllstand, der sich in etwa auf gleicher Höhe mit einer Austragsöffnung des oberen Sammelkopfs 5 befindet.

Die Suspension wird unter Schwerkraftwirkung oder gegebenenfalls mittels der Pumpe 17 in den Zuführkanal 10 geleitet und gelangt über die Zuführöffnung 9 in den oder die Kanäle 3. Die Einleitung erfolgt zweckmäßigerweise quer zur Längsachse der Kanäle 3 direkt zwischen die Platten.

Dort schwimmen die Feststoffteilchen, die spezifisch leichter sind als das Trennmedium, in Richtung auf den oberen Sammelkopf 4 auf, während die Feststoffteilchen, die spezifisch schwerer sind als das Trennmedium, in Richtung auf den unteren Sammelkopf 5 absinken. An der jeweils oberen Platte 6 eines Kanals 3 bildet sich so ein aufschwimmender Leichtfraktionsstrom aus, während sich an der jeweils unteren Platte 6 des Kanals 3 ein absinkender Schwerfraktionsstrom ausbildet. Infolge der Länge der Kanäle 3 und der verhältnismäßig geringen Höhe haben die Feststoffteilchen ausreichend Zeit, in den ihrer Dichte entsprechenden Fraktionsstrom aufzuschwimmen oder abzusinken.

An den Sammelköpfen 4, 5 ist jeweils ein Abscheider 22 angeschlossen, in dem das Trennmedium von den Feststoffteilchen getrennt wird. Das Trennmedium wird einem Tank 23 zugeführt und von dort den Trennmediumkreislauf schließend über die Pumpe 24 in die Mischvorrichtung 20 zurückgeführt.

In einer Ausführungsform mit nur zwei Pumpen 15, 24 weist der obere Sammelkopf 4 einen Überlauf 21 auf und die Mischvorrichtung 20 ist über eine einfache Schlauchverbindung o.ä. mit dem Zuführkanal 10 verbunden oder an einen sehr kurzen Zuführkanal von 100 bis 600, vorzugsweise 200 bis 400 mm Länge, direkt angeflanscht, vgl. Fig. 9. Wird die Förderleistung der Pumpe 24 bei konstanter Förderleistung der Pumpe 15 erhöht oder verringert, erhöht bzw. verringert sich die Geschwindigkeit des aufwärts gerichteten Leichtfraktionsstroms. Wird die Förderleistung der Pumpe 15 erhöht oder verringert, erhöht bzw. verringert sich die Geschwindigkeit des abwärts gerichteten Schwerfraktionsstroms, wobei die Förderleistung der Pumpe 24 entsprechend anzupassen ist, um einen Unter- bzw. Überlauf der Mischvorrichtung 20 zu vermeiden. Die optimalen Förderleistungen werden empirisch ermittelt. Die Geschwindigkeitsdifferenz zwischen den beiden Fraktionsströmen ist in dieser Ausführungsform besonders einfach und genau einstellbar.

In einer weiteren Ausführungsform ist nur eine Pumpe vorgesehen, beispielsweise die Pumpe 24. Durch Steuerung der Förderleistung dieser Pumpe 24 ist bei gleichbleibendem Austrag aus dem unteren Sammelkopf 5 die Geschwindigkeit des Leichtfraktionsstroms bei gleichbleibender Geschwindigkeit des Schwerfraktionsstroms und mithin die Geschwindigkeitsdifferenz zwischen den beiden Fraktionsströmen veränderbar.

In weiteren Ausführungsformen sind andere und gegebenenfalls mehrere oder alle der Pumpen 15, 16, 17, 24 in beliebiger Kombination mit entsprechender Steuerung vorgesehen.

Die Mischvorrichtung 20 kann an mehrere, insbesondere wie in Fig. 9 gezeigt an vier Zuführkanäle 10 für jeweils eine Vorrichtung zum Schwimm-Sink-Trennen angeschlossen sein, wodurch sich der Durchsatz entsprechend erhöht.

Die Vorrichtung arbeitet vorzugsweise bei einer Reynoldszahl, definiert durch die Geschwindigkeit der Strömung einer Fraktion multipliziert mit der Dichte und dividiert durch die Viskosität, unterhalb von 2000 und vorzugsweise unterhalb von 700.

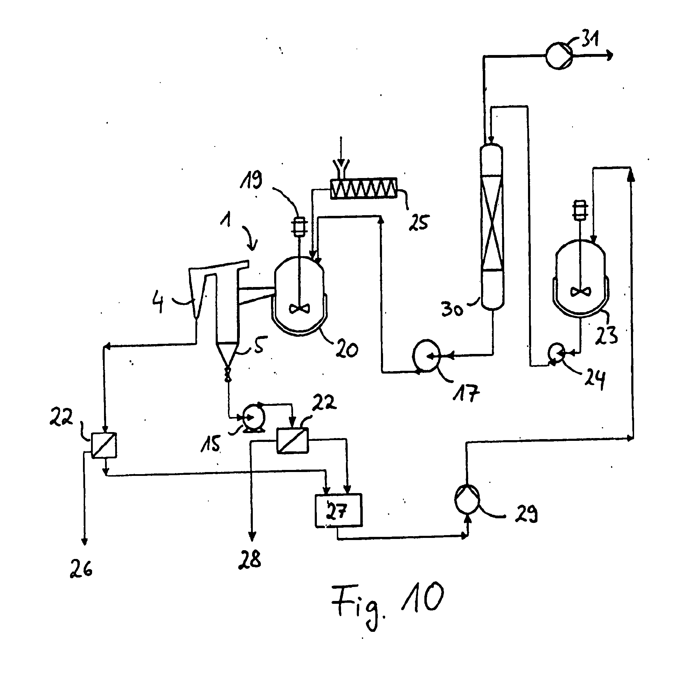

Bei der in Fig. 10 dargestellten Trennanlage werden Feststoffteilchen über eine Dosierschnecke 25 dosiert in die Mischvorrichtung 20 eingebracht. Dort werden sie mittels der Rührvorrichtung 19 mit dem Trennmedium zu einer Suspension vermischt. Die Suspension wird durch die Vorrichtung 1 zum Schwimm-Sink-Trennen geleitet. Der Austrag vom oberen Sammelkopf 4 wird in den Abscheider 22 geleitet, der aufgeschwommene Feststoffteilchen 26 vom Trennmedium trennt. Das Trennmedium wird dann einem Trennmediumfilter 27 zugeführt. Analog hierzu wird der Austrag vom unteren Sammelkopf 5 über die Pumpe 15 einem weiteren Abscheider 22 zugeführt, der abgesunkene Feststoffteilchen 28 vom Trennmedium trennt und das Trennmedium ebenfalls dem Trennmediumfilter 27 zuführt. Eine Trennmittelkreislaufpumpe 29 befördert das Trennmittel weiter zum Tank 23. Von dort gelangt das Trennmittel über die Pumpe 24 zu einer Entgasungsvorrichtung 30, beispielsweise einem Tank mit einer Vakuumpumpe 31. In der Entgasungsvorrichtung 30 wird im Trennmittel gelöstes Gas, insbesondere Luft, dem Trennmittel entzogen. Hierzu ist eine Pumpe 31 vorgesehen. Das Trennmittel wird über die Pumpe 17 wieder in die Mischvorrichtung 20 zurückgeführt, wodurch sich der Trennmittelkreislauf schließt.

In der Mischvorrichtung 20, die unter Vakuum oder reduziertem Druck arbeiten kann, absorbiert das Trennmittel Luftteilchen, die an den Feststoffteilchen anhaften, bis zu seiner Sättigung. Den Feststoffteilchen der Suspension, die aus der Mischvorrichtung 20 in die Vorrichtung 1 zum Schwimm-Sink-Trennen geleitet wird, haften dadurch weniger bis gar keine Auftriebsgase an.

Bei Einsatz einer Entgasungsvorrichtung 30, die eine ausreichende Entgasung des Trennmediums vor Herstellung der Suspension gewährleistet, kann abhängig von den Stoffeigenschaften der spezifisch schweren Feststoffteilchen die Differenzgeschwindigkeit, die ohne Entgasungsvorrichtung 30 zum Kompensieren des Auftriebseffekts erforderlich wäre, bis auf den Wert Null reduziert werden, d.h. die aufschwimmende Leichtfraktion hat betragsmäßig die gleiche Geschwindigkeit wie die absinkende Schwerfraktion. Diese Einstellung der Trennparameter erlaubt dann eine Geschwindigkeitseinstellung der beiden Teilströme, die sich nach der zulässigen Beladungsdichte der beiden Teilströme, der zur Trennung notwendigen Verweilzeit der Feststoffteilchen in den Kanälen und der Einhaltung der notwendigen Laminarströmung in den Kanälen ausrichtet. Bei stark unterschiedlichen Mengenanteilen des Leicht- und Schwerguts kann demnach wieder die Einstellung einer Strömungsdifferenz sinnvoll werden, die nun aber der Optimierung des Durchsatzes und nicht der Optimierung des Trennergebnisses, also der Trennschärfe, dient.

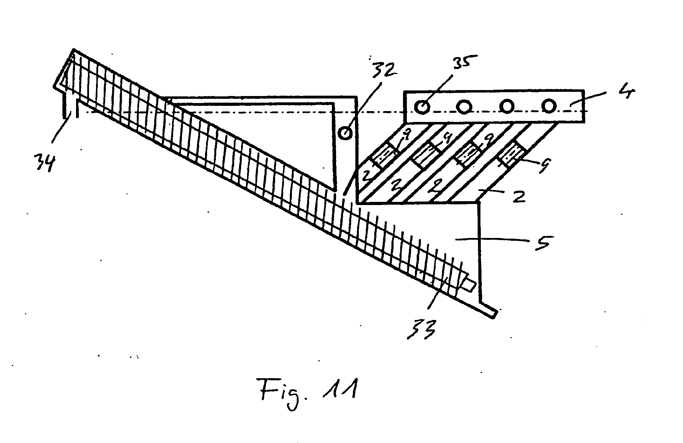

In der in Fig. 11 dargestellten Trennvorrichtung sind vier Trennräume 2 zwischen einem gemeinsamen oberen Sammelkopf 4 und einem gemeinsamen unteren Sammelkopf 5 angeordnet. Im unteren Sammelkopf 5 ist eine Schnecke 33 vorgesehen, die anstelle der Pumpe 15 der Fig. 8 tritt. Der im Sammelkopf 5 ankommende Schwerfraktionsstrom wird mit ihrer Hilfe wie folgt aufgeteilt: die Feststoffteilchen der Schwerfraktion werden mittels der Schnecke 33 bei 34 oberhalb der Höhe der Ausläufe 35 im Sammelkopf 4 ausgetragen, wogegen das Trennmittel des Stroms vorzugsweise mit einer mengengeregelten Pumpe zur Aufrechterhaltung konstanter Strömungsgeschwindigkeiten im Trennraum 2 über die Öffnung 32 ausgetragen wird.

## Patentansprüche

1. Vorrichtung (1) zum Schwimm-Sink-Trennen von Feststoffteilchen unterschiedlicher Dichte, insbesondere von Schreddergranulaten verschiedener Kunststoffe, mit einem mit einer Suspension aus den zu trennenden Feststoffteilchen und einem Trennmedium füllbaren Trennraum (2) und einem unteren und einem oberen an den Trennraum angeschlossenen Sammelkopf (4, 5) für unter Schwerkrafteinwirkung abgesunkene bzw. aufgeschwommene Feststoffteilchen, **dadurch gekennzeichnet, dass** eine Entgasungsvorrichtung (30) zum zumindest teilweisen Entfernen von im Trennmedium gelöstem Gas vorgesehen ist und die Entgasungsvorrichtung (30) dazu ausgestaltet ist, das Trennmedium derart aus dem Gas-Gleichgewichtszustand zu versetzen, dass das Trennmedium den Feststoffteilchen anhaftendes Gas absorbieren kann.

2. Vorrichtung nach Anspruch 1, **dadurch gekennzeichnet, dass** die Entgasungsvorrichtung (30) einer Mischvorrichtung (20) zum Vermischen der Feststoffteilchen mit dem Trennmedium vorgeschaltet ist.

3. Vorrichtung nach Anspruch 1 oder 2, **dadurch gekennzeichnet, dass** die Mischvorrichtung (20) gasdicht ausgestaltet ist.

4. Vorrichtung nach einem der Ansprüche 1 bis 3, **dadurch gekennzeichnet, dass** die Mischvorrichtung (20) mit einem Inertgas beaufschlagt ist.

5. Vorrichtung nach einem der Ansprüche 1 bis 4, **dadurch gekennzeichnet, dass** die Mischvorrichtung (20) mit einer Absaugvorrichtung zum Entfernen von mit den zu trennenden Feststoffteilchen eingetragenem Gas versehen ist.

6. Vorrichtung nach einem der Ansprüche 1 bis 5, **dadurch gekennzeichnet, dass** die Entgasungsvorrichtung (30) einen Tank und eine Vakuumpumpe (31) aufweist.

7. Vorrichtung nach einem der Ansprüche 1 bis 6, **dadurch gekennzeichnet, dass** das Gas Luft ist.

8. Vorrichtung (1) nach dem Oberbegriff des Anspruchs 1, **dadurch gekennzeichnet, dass** eine Mischvorrichtung (20) zum Vermischen der Feststoffteilchen mit dem Trennmedium vorgesehen ist und die Mischvorrichtung (20) mit einer Absaugvorrichtung zum Entfernen von mit den zu trennenden Feststoffteilchen eingetragener Luft versehen ist.

9. Vorrichtung nach Anspruch 8, **dadurch gekennzeichnet, dass** die Mischvorrichtung (20) zum Mischen unter Vakuum oder unter reduziertem Druck ausgestaltet ist.

10. Verfahren zum Schwimm-Sink-Trennen von Feststoffteilchen unterschiedlicher Dichte, insbesondere von Schreddergranulaten verschiedener Kunststoffe, bei dem ein Trennraum (2) mit einer Suspension aus den zu trennenden Feststoffteilchen und einem Trennmedium gefüllt wird und unter Schwerkrafteinwirkung abgesunkene und aufgeschwommene Feststoffteilchen in einen unteren bzw. oberen an den Trennraum (2) angeschlossenen Sammelkopf (4, 5) gesammelt werden, **dadurch gekennzeichnet, dass** im Trennmedium gelöstes Gas in einer Entgasungsvorrichtung (30) zumindest teilweise entfernt wird und das Trennmedium derart aus dem Gas-Gleichgewichtszustand versetzt wird, dass das Trennmedium den Feststoffteilchen anhaftendes Gas absorbieren kann.

11. Verfahren Anspruch 10, **dadurch gekennzeichnet, dass** die Gasentfernung vor dem Vermischen der Feststoffteilchen mit dem Trennmedium durchgeführt wird.

12. Verfahren nach Anspruch 10 order 11, **dadurch gekennzeichnet, dass** die Feststoffteilchen mit dem Trennmedium in einer gasdichten Mischvorrichtung (20) und insbesondere in Inertgasatmosphäre vermischt werden.

13. Verfahren, insbesondere nach einem der Ansprüche 10 bis 12, **dadurch gekennzeichnet, dass** beim Mischen in der Mischvorrichtung (20) mit den zu trennenden Feststoffteilchen eingetragenes Gas mittels einer Absaugvorrichtung entfernt wird.

14. Verfahren nach Anspruch 13, **dadurch gekennzeichnet, dass** die Feststoffteilchen und das Trennmedium unter Vakuum oder unter reduziertem Druck vermischt werden.

15. Verfahren nach einem der Ansprüche 10 bis 14, **dadurch gekennzeichnet, dass** eine Wandung des Trennraums oder eines darin gebildeten Kanals (3) zu Schwingungen angeregt wird.

## Claims

1. Apparatus (1) for the swim-sink separation of solid particles of different densities, and in particular various shredded granulated plastics materials, having a separating chamber (2) which can be filled with a suspension of the solid particles to be separated and a separation medium and having a lower and an upper collecting head (4, 5) connected to the separating chamber, for particles which have respectively sunk and swum up under the force of gravity, **characterised in that** a degasifying arrangement (30) is provided for the at least partial removal of gas dissolved in the separation medium, and the degasifying arrangement (30) is designed to shift the separation medium out of the gas equilibrium state in such a way that the separation medium is able to absorb gas clinging to the solid particles.

2. Apparatus according to claim 1, **characterised in that** the degasifying arrangement (30) is inserted upstream of a mixing arrangement (20) for mixing the solid particles with the separation medium.

3. Apparatus according to claim 1 or 2, **characterised in that** the mixing arrangement (20) is of gastight form.

4. Apparatus according to one of claims 1 to 3, **characterised in that** the mixing arrangement (20) has an inert gas applied to it.

5. Apparatus according to one of claims 1 to 4, **characterised in that** the mixing arrangement (20) is provided with an extractor arrangement to remove gas which is carried in with the solid particles to be separated.

6. Apparatus according to one of claims 1 to 5, **characterised in that** the degasifying arrangement (30) has a tank and a vacuum pump (31).

7. Apparatus according to one of claims 1 to 6, **characterised in that** the gas is air.

8. Apparatus (1) according to the preamble of claim 1, **characterised in that** a mixing arrangement (20) for mixing the solid particles with the separation medium is provided and the mixing arrangement (20) is provided with an extractor arrangement to remove air which is carried in with the solid particles to be separated.

9. Apparatus according to claim 8, **characterised in that** the mixing arrangement (20) is designed for mixing under vacuum or at reduced pressure.

10. Method for the swim-sink separation of solid particles of different densities, and in particular various shredded granulated plastics materials, in which a separating chamber (2) is filled with a suspension of the solid particles to be separated and a separation medium, and particles which have sunk and swum up under the force of gravity are collected in, respectively, a lower and an upper collecting head (4, 5) connected to the separating chamber (2), **characterised in that** gas dissolved in the separation medium is at least partly removed in a degasifying arrangement (30), and the separation medium is shifted out of the gas equilibrium state in such a way that the separation medium is able to absorb gas clinging to the solid particles.

11. Method claim 10, **characterised in that** the gas removal is carried out before the mixing of the solid particles with the separation medium.

12. Method according to claim 10 or 11, **characterised in that** the solid particles are mixed with the separation medium in a gastight mixing arrangement (20) and in particular in an atmosphere of inert gas.

13. Method according to one of claims 10 to 12, **characterised in that** gas which is carried in with the solid particles in the course of the mixing in the mixing arrangement (20) is removed by means of an extractor arrangement.

14. Method according to claim 13, **characterised in that** the solid particles and the separation medium are mixed under vacuum or at reduced pressure.

15. Method according to one of claims 10 to 14, **characterised in that** a wall of the separating chamber or of a passage (3) formed therein is excited to vibrate.

## Revendications

1. Dispositif (1) servant à séparer des particules solides plongeantes et flottantes à densités différentes, en particulier de granulés d'installation de déchiquetage de différentes matières plastiques, comportant un espace de séparation (2) pouvant être rempli d'une suspension constituée de particules solides à séparer et d'un milieu de séparation et deux têtes collectrices (4, 5), à savoir une tête collectrice inférieure et une tête collectrice supérieure, raccordées à l'espace de séparation, pour des particules solides plongeantes ou flottantes sous l'effet de la gravité, **caractérisé en ce qu'**un dispositif de dégazage (30) est prévu pour supprimer au moins en partie le gaz dissous dans le milieu de séparation, et **en ce que** ledit dispositif de dégazage (30) est configuré dans le but de sortir le milieu de séparation de l'état d'équilibre gazeux de telle manière que le milieu de séparation peut absorber le gaz adhérant aux particules solides.

2. Dispositif selon la revendication 1, **caractérisé en ce que** le dispositif de dégazage (30) est disposé en amont d'un dispositif de mélange (20) servant à mélanger les particules solides avec le milieu de séparation.

3. Dispositif selon la revendication 1 ou 2, **caractérisé en ce que** le dispositif de mélange (20) est configuré de manière étanche aux gaz.

4. Dispositif selon l'une quelconque des revendications 1 à 3, **caractérisé en ce que** le dispositif de mélange (20) est soumis à l'action d'un gaz inerte.

5. Dispositif selon l'une quelconque des revendications 1 à 4, **caractérisé en ce que** le dispositif de mélange (20) est pourvu d'un dispositif d'aspiration servant à supprimer le gaz chargé avec les particules solides à séparer.

6. Dispositif selon l'une quelconque des revendications 1 à 5, **caractérisé en ce que** le dispositif de dégazage (30) présente un réservoir et une pompe à vide (31).

7. Dispositif selon l'une quelconque des revendications 1 à 6, **caractérisé en ce que** le gaz est de l'air.

8. Dispositif (1) selon le préambule de la revendication 1, **caractérisé en ce qu'**un dispositif de mélange (20) est prévu pour mélanger les particules solides avec le milieu de séparation, et **en ce que** le dispositif de mélange (20) est pourvu d'un dispositif d'aspiration servant à supprimer l'air chargé de particules solides à séparer.

9. Dispositif selon la revendication 8, **caractérisé en ce que** le dispositif de mélange (20) est configuré pour procéder à un mélange sous vide ou sous pression réduite.

10. Procédé servant à séparer des particules solides plongeantes et flottantes de densités différentes, en particulier des granulés d'installation de déchiquetage de différentes matières plastiques, dans le cadre duquel un espace de séparation (2) est rempli d'une suspension constituée de particules solides à séparer et d'un milieu de séparation et des particules solides plongeantes et flottantes sous l'effet de la gravité sont collectées dans une tête collectrice (4, 5) inférieure ou supérieure raccordée à l'espace de séparation (2), **caractérisé en ce que** du gaz dissous dans le milieu de séparation est supprimé au moins en partie dans un dispositif de dégazage (30), et **en ce que** le milieu de séparation est sorti de l'état d'équilibre gazeux de telle manière que le milieu de séparation peut absorber le gaz adhérant aux particules solides.

11. Procédé selon la revendication 10, **caractérisé en ce que** la suppression du gaz est effectuée avant de mélanger les particules solides avec le milieu de séparation.

12. Procédé selon la revendication 10 ou 11, **caractérisé en ce que** les particules solides sont mélangées avec le milieu de séparation dans un dispositif de mélange (20) étanche aux gaz et en particulier dans une atmosphère de gaz inerte.

13. Procédé, en particulier selon l'une quelconque des revendications 10 à 12, **caractérisé en ce que** le gaz chargé avec les particules solides à séparer lors du mélange dans le dispositif de mélange (20) est supprimé au moyen d'un dispositif d'aspiration.

14. Procédé selon la revendication 13, **caractérisé en ce que** les particules solides et le milieu de séparation sont mélangés sous vide ou sous une pression réduite.

15. Procédé selon l'une quelconque des revendications 10 à 14, **caractérisé en ce qu'**une paroi de l'espace de séparation ou d'un canal (3) formé à l'intérieur est amenée à vibrer.
